# EUROPEAN PATENT APPLICATION

(11) **EP 3 214 607 A1**
(43) Date of publication of application: **06.09.2017**
(21) Application number: 17156897.5
(22) Date of filing: 20.02.2017
(51) Int. Cl.: G07G 1/00, G08B 13/24

(54) **REGISTER SYSTEM CAPABLE OF DISABLING SECURITY TAGS**

(30) Priority: 29.02.2016 JP 2016037808
(71) Applicant: Toshiba TEC Kabushiki Kaisha, Tokyo 141-0032 (JP)
(72) Inventor: GOTANDA, Tsuyoshi, Shinagawa-ku, Tokyo 141-8562 (JP); SHISHIDO, Norifumi, Shinagawa-ku, Tokyo 141-8562 (JP)
(74) Representative: Takeuchi, Maya

(57) **Abstract**

A register system includes a first code scanner that includes a circuit configured to disable a security tag, a second code scanner that does not include the circuit, a data storage in which a product code is stored in association with a flag, for each product registered for sale, and a processor. The processor is configured to carry out purchase registration of a product based on a product code obtained through the second code scanner or cause a notification to be generated without carrying out the purchase registration of the product based on the product code obtained through the second code scanner, depending on a state of a flag associated with the obtained product code in the data storage.

## Description

### FIELD

The present invention relates in general to a data inputting technology used e.g. on a merchandise and embodiments described herein relate in particular to a register system capable of disabling security tags and a method for carrying out purchase registration therewith.

### BACKGROUND

According to a merchandise data input apparatus, such as a point-of-sale (POS) terminal, of one type, an identification code of a merchandise item can be obtained using a plurality of devices. For example, a handheld scanner or a fixed-type (non-handheld) scanner, a touch key provided on a touch panel, a mechanical button, a numeric key and the like can be used for obtaining the identification code of the merchandise item.

In some cases, the identification code has to be obtained using a specific device, in order to carry out another operation at the same time. For example, there is a scanner that includes a disabling device that disables a security tag attached to a merchandise item. When such a scanner is placed close to the merchandise item to obtain the identification code of the merchandise item, the security tag is disabled by the disabling device at the same time. In contrast, when the identification code is obtained by the other devices without disabling the security tag, the security tag has to be disabled by the disabling device later. Otherwise, the non-disable security tag may cause an erroneous alert even if the merchandise item is properly subjected to purchase registration.

Therefore, it would be desirable to use the scanner including the disabling device to register merchandise items with security tags.

To this end, there is provided a register system comprising:
a first code scanner that includes a circuit configured to disable a security tag;
a second code scanner that does not include the circuit;
a data storage in which a product code is stored in association with a flag, for each product registered for sale; and
a processor configured to carry out purchase registration of a product based on a product code obtained through the second code scanner or cause a notification to be generated without carrying out the purchase registration of the product based on the product code obtained through the second code scanner, depending on a state of a flag associated with the obtained product code in the data storage.

Preferably, when the flag associated with the obtained product code is in a first state, the processor carries out the purchase registration of the product based on the product code obtained through the second code scanner, and
when the flag associated with the obtained product code is in a second state different from the first state, the processor causes the notification to be generated without carrying out the purchase registration.

Preferably still, the processor carries out purchase registration of the product based on a product code obtained through the first code scanner after the notification is generated.

Preferably yet, the notification includes a visual message prompting a user to use the first code scanner for purchase registration of the product.

Suitably, the processor is configured to carry out purchase registration of products based on product codes obtained through the first code scanner, regardless of states of flags associated therewith in the data storage.

In the above register system, the first code scanner is preferably a handheld scanner, and the second code scanner is preferably a non-handheld scanner.

The invention also relates to a register system comprising:
a code scanner that includes a circuit configured to disable a security tag;
an operation panel;
a data storage in which a product code is stored in association with a flag, for each product registered for sale; and
a processor configured to carry out purchase registration of a product based on a product code input through the operation panel or cause a notification to be generated without carrying out the purchase registration of the product based on the product code input through the operation panel, depending on a state of a flag associated with the input product code in the data storage.

Preferably, when the flag associated with the input product code is in a first state, the processor carries out the purchase registration of the product based on the product code input through the operation panel, and
when the flag associated with the input product code is in a second state different from the first state, the processor causes the notification to be generated without carrying out the purchase registration.

Preferably still, the processor carries out purchase registration of the product based on a product code obtained through the code scanner after the notification is generated.

Preferably yet, the notification includes a visual message prompting a user to use the code scanner for purchase registration of the product.

Suitably, the processor is configured to carry out purchase registration of products based on product codes obtained through the code scanner, regardless of states of flags associated therewith in the data storage.

In the above register system, the code scanner is preferably a handheld scanner.

Typically, each of the above two register systems further comprises a display, wherein the processor causes the notification to be displayed on the display.

The invention further concerns a method for carrying out purchase registration with a register system, comprising:
storing, in a data storage, a product code in association with a flag for each product registered for sale;
obtaining a product code of a product through code scanning by a code scanner or a code input on a control panel, without disabling a security tag attached to the product;
when a flag associated with the obtained product code is in a first state in the data storage, processing purchase registration of the product based on the obtained product code; and
when the flag associated with the obtained product code is in a second state different from the first state in the data storage, generating a notification without processing the purchase registration of the product based on the obtained product code.

Suitably, the method further comprises:
after the notification is generated, obtaining a product code of the product through code scanning by a second code scanner while disabling the security tag attached to the product; and
processing purchase registration of the product based on the product code obtained through the code scanning by the second scanner.

Suitably still, the notification is displayed on a display of the register system.

Suitably yet, the notification includes a visual message prompting a user to not use the code scanner for purchase registration of the product.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is an overview of a POS terminal according to an embodiment.
FIG. 2 is a block diagram of the POS terminal illustrated in FIG. 1.
FIG. 3 illustrates a structure of a data record included in a PLU file stored in the POS terminal.
FIG. 4 is a flowchart illustrating a control process of a CPU in a merchandise data input apparatus.
FIG. 5 illustrates an example of a notification screen.

### DETAILED DESCRIPTION

An embodiment provides a merchandise data input apparatus that is capable of inputting an identification code of a merchandise item using an appropriate inputting unit corresponding to the merchandise item and a control program thereof.

In general, according to an embodiment, a register system includes a first code scanner that includes a circuit configured to disable a security tag, a second code scanner that does not include the circuit, a data storage in which a product code is stored in association with a flag, for each product registered for sale, and a processor. The processor is configured to carry out purchase registration of a product based on a product code obtained through the second code scanner or cause a notification to be generated without carrying out the purchase registration of the product based on the product code obtained through the second code scanner, depending on a state of a flag associated with the obtained product code in the data storage.

Hereinafter, an embodiment of a merchandise data input apparatus will be described with reference to the drawings. The embodiment assumes a situation where a POS terminal is used as a merchandise registration apparatus in a store such as a supermarket and reads a price look up (PLU) code as an identification code of a sold merchandise item and registers the PLU code as the PLU code of the sold merchandise item.

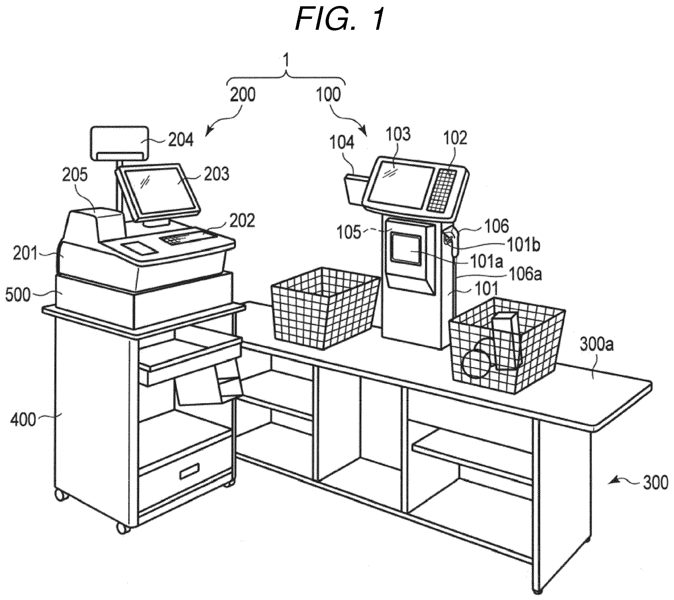

FIG. 1 illustrates an overview of a POS terminal 1 that includes a merchandise data input apparatus according to the embodiment.

The POS terminal 1 illustrated in FIG. 1 includes a scanner unit 100 and a main unit 200. The scanner unit 100 is attached on a cashier counter 300. The main unit 200 is placed on a drawer 500 which is mounted on a register table 400. The scanner unit 100 and the main unit 200 are electrically connected to each other via a communication cable (not shown). Instead of the drawer 500, an automatic change machine may be mounted.

The scanner unit 100 includes a housing 101, a keyboard 102, a touch panel 103, a customer-side display 104, a fixed scanner 105, and a handy unit 106.

The housing 101 is flat box-shaped and standing on the cashier counter 300. An upper end of the housing 101 supports the keyboard 102, the touch panel 103, and the customer-side display 104, and the fixed scanner 105 is included in the housing 101. The housing 101 includes a reading window 101a that faces the fixed scanner 105 and an object positioned on the front of the reading window 101a can be scanned by the fixed scanner 105 via the reading window 101a. A placement stand 101b is attached to the housing 101. The handy unit 106 is hung on the placement stand 101b. The handy unit 106 is connected to the scanner unit 100 via a cable 106a, and is used by being held by an operator. Generally, the operator is a store clerk.

The main unit 200 includes a housing 201, a keyboard 202, an operator-side display 203, a customer-side display 204, and a printer 205.

The housing 201 supports the keyboard 202 with a portion of the keyboard 202 exposed to the outside. The operator-side display 203 and the customer-side display 204 are supported by the housing 201 on the outside of the housing 201, and the printer 205 is included in the housing 201.

The cashier counter 300 includes a thin and long top board 300a. The cashier counter 300 divides a space into a customer path (back side in FIG. 1) extending along a longitudinal direction of the top board and an operator space (front side in FIG. 1). The housing 101 is positioned on the substantially central portion in the longitudinal direction of the top board 300a with the keyboard 102, the touch panel 103, and the reading window 101a facing the operator space and with the customer-side display 104 facing the customer path. An area of an upper surface of the top board 300a on an upstream side in a customer movement direction with respect to the scanner unit 100 is used as a space for placing merchandise items that have not been subjected to sales registration. In addition, an area of an upper surface of the top board 300a on a downstream side in the shopper movement direction with respect to the scanner unit 100 is used as a space for placing merchandise items that have been subjected to the sales registration.

The register table 400 is positioned on the operator space side in such a manner that the register table 400 is positioned next to an end portion of the cashier counter 300 on the downstream side in the movement direction of the shopper in the customer path.

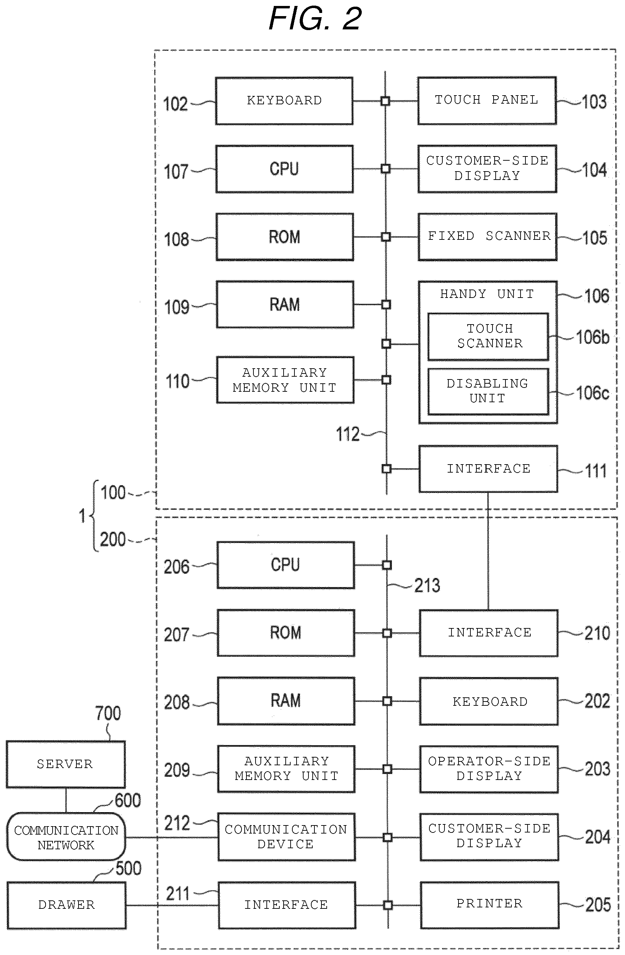

FIG. 2 is a block diagram of the POS terminal 1 illustrated in FIG. 1. Elements shown in FIG. 2 which are the same as the elements shown in FIG. 1 are given the same reference numbers as in FIG. 1.

The scanner unit 100 includes a central processing unit (CPU) 107, a read-only memory (ROM) 108, a random-access memory (RAM) 109, an auxiliary memory unit 110, an interface 111, and a bus line 112, in addition to the keyboard 102, the touch panel 103, the customer side display 104, the fixed scanner 105, and the handy unit 106. The bus line 112 includes an address bus, a data bus, and the like and connects the keyboard 102, the touch panel 103, the customer side display 104, the fixed scanner 105, the handy unit 106, the CPU 107, the ROM 108, the RAM 109, the auxiliary memory unit 110, and the interface 111 to each other.

The keyboard 102 includes a plurality of key switches and outputs a command indicating contents of an operation of each key switch by an operator.

The touch panel 103 includes a display device such as a liquid crystal display (LCD) and a transparent two-dimensional touch sensor which overlaps a display screen of the display device. The touch panel 103 displays an arbitrary image on the display device under control of the CPU 107. The touch panel 103 detects a position of the display screen of the display device which is touched by an operator using the two-dimensional touch sensor and outputs coordinate data indicating the touch position. The touch panel 103 is used for displaying an image for various kinds of information to the operator or for inputting an operator operation by the operator.

The customer-side display 104 displays an arbitrary character string or an arbitrary image under control of the CPU 107. The customer-side display 104 is used for displaying various character strings or images supposed to be presented to a customer. As the customer-side display 104, for example, a fluorescent tube display or a LCD can be used.

The fixed scanner 105 optically reads a barcode of a merchandise item placed in front of the reading window 101 a to recognize information (hereinafter, referred to as barcode information) indicated by the barcode, which is an optically-recognizable pattern formed on the merchandise item. The fixed scanner 105 outputs the barcode information to the CPU 107. As the fixed scanner 105, another type of known devices that read a barcode using laser light reflection may also be used. Furthermore, as the fixed scanner 105, a type of known devices which have a function of specifying a merchandise item from an image, which is obtained by imaging the merchandise item using an object identification technique, may also be used.

The handy unit 106 includes a touch scanner 106b and a disabling unit 106c. If the handy unit 106 is close to a barcode on a merchandise item, the touch scanner 106b optically reads the barcode. If the handy unit 106 is close to a security tag attached to a merchandise item, the disabling unit 106c disables the security tag. The disabling unit 106c and the security tag can be configured using a known art without modification. For example, a security tag that is destroyed when receiving a specific radio wave can be used as the security tag, and a disabling unit which transmits the specific radio wave can be used as the disabling unit 106c. This is referred to as a radio frequency (RF) system. For the security tag, an acoustic magnetic (AM) system and a radio frequency identification (RFID) system are also known, and the security tag and the disabling unit 106c according to these systems may also be used.

The CPU 107 controls each element of the scanner unit 100 on the basis of an operating system, middleware, and an application program stored in the ROM 108 and the RAM 109 in order to carry out various operations of the scanner unit 100.

The ROM 108 stores the operating system. The ROM 108 may store the middleware or the application program. Furthermore, the ROM 108 may store data that are referred to when the CPU 107 carries out various processes.

The RAM 109 stores data that are referred to when the CPU 107 carries out various processes. Furthermore, the RAM 109 is used as a so-called work area which stores data that are temporarily used when the CPU 107 carries out various processes.

The auxiliary memory unit 110 stores data that are used when the CPU 107 carries out various processes and stores data that are generated through a process carried out by the CPU 107. The auxiliary memory unit 110 may store the middleware or the application program. As the auxiliary memory unit, an electric erasable programmable read-only memory (EEPROM), a hard disk drive, or a solid state drive (SSD) can be used.

The interface 111 relays data between the main unit 200 and the CPU 107. As the interface 111, for example, a known device based on a USB standard or a RS-232C standard can be used.

The main unit 200 includes a CPU 206, a ROM 207, a RAM 208, an auxiliary memory unit 209, an interface 210, an interface 211, a communication device 212, and a bus line 213 as electrical elements, in addition to the keyboard 202, the operator side display 203, the customer side display 204, and the printer 205. The bus line 213 includes an address bus, a data bus, and the like and connects the CPU 206, the ROM 207, the RAM 208, the auxiliary memory unit 209, the interface 210, the interface 211 and the communication device 212 to each other.

The keyboard 202 includes a plurality of key switches and outputs a command indicating contents of an operation of each key switch by an operator.

The operator-side display 203 displays an arbitrary image under control of the CPU 206. The operator-side display 203 is used for displaying various images to an operator. As the operator-side display 203, for example, a LCD can be used.

The customer-side display 204 displays an arbitrary character string or an arbitrary image under control of the CPU 206. The customer-side display 204 is used for displaying various character strings or images to a customer. As the customer-side display 204, for example, a fluorescent tube display or a LCD can be used.

The printer 205 prints a receipt image which shows contents of trade on a receipt sheet under control of the CPU 206. As the printer 205, known printers of various types can be used. Typically the printer 205 is a thermal printer.

The CPU 206 controls each unit of the main unit 200 on the basis of an operating system, middleware, and an application program stored in the ROM 207 and the RAM 208 in order to carry out various operations of the main unit 200.

The ROM 207 stores the operating system. The ROM 207 may store the middleware or the application program. Furthermore, the ROM 207 may store data that are referred to when the CPU 206 carries out various processes.

The RAM 208 stores data that are referred to when the CPU 206 carries out various processes. Furthermore, the RAM 208 is used as a so-called work area which stores data that are temporarily used when the CPU 206 carries out various processes. A portion of a storage area of the RAM 208 is used as a merchandise list area which is used for management of information of merchandise items after sales registration.

The auxiliary memory unit 209 is, for example, a hard disk drive, a SSD, or the like and stores data that are used when the CPU 206 carries out various processes and data that are generated through a process carried out by the CPU 206. The auxiliary memory unit 209 may store the middleware or the application program.

In this manner, the CPU 206, the ROM 207, the RAM 208 and the auxiliary memory unit 209 serve as a computer. The CPU 206 corresponds to a central portion of the computer. The ROM 207 and the RAM 208 correspond to a main memory portion of the computer. The auxiliary memory unit 209 corresponds to an auxiliary memory portion of the computer.

The application program stored in the ROM 207 or the auxiliary memory unit 209 includes a control program that is used to carry out the control process. Generally, the main unit 200 is distributed to a user with the control program stored in the ROM 207 or the auxiliary memory unit 209. However, the main unit 200 may be distributed to a user without the control program stored in the ROM 207 or the auxiliary memory unit 209. A removable non-transitory recording medium in which the control program is recorded may be distributed to the user or the control program may be distributed to the user via a network. The control program may be written in the auxiliary memory unit 209 of the main unit 200, which can be separately distributed to the user, according to an operation of the user or the like. As the recording medium, a magnetic disk, a magneto-optical disk, an optical disk, a semiconductor memory or the like can be used.

The interface 210 relays data between the scanner unit 100 and the CPU 206. As the interface 210, for example, a known device based on the same standard as the interface 111 can be used.

The interface 211 outputs a driving signal for opening the drawer 500 to the drawer 500 when the CPU 206 issues an instruction to open the drawer.

The communication device 212 communicates with a server 700 via a communication network 600. As the communication device 212, for example, a known LAN communication device can be used.

Next, an operation of the POS terminal 1 configured as described above will be described.

Before the POS terminal 1 is operated, a PLU file is stored in the RAM 207 of the main unit 200 or in the auxiliary memory unit 209. The PLU file includes a plurality of data records which are related to respective merchandise items sold at a store in which the POS terminal 1 is used.

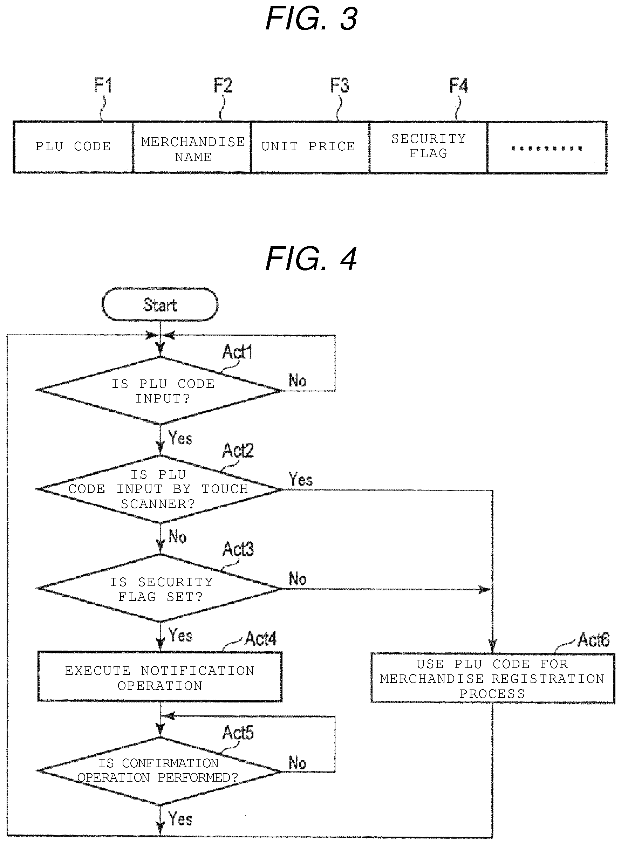

FIG. 3 illustrates a structure of a data record included in the PLU file.

The data record includes data fields of fields F1, F2, F3, and F4. Each of the fields F1, F2, and F3 is filled with a PLU code which is an identification code of a corresponding merchandise item, a name, and a unit price of the merchandise item, respectively. The filed F4 is filled with a security flag. The security flag is one bit data which indicates whether or not a merchandise item for which a security tag is attached. In the present embodiment, it is assumed that the security flag is set for merchandise items for which the security tag is attached. The merchandise item for which the security tag is attached may be arbitrarily determined by an operations manager or the like of the store.

Typically, a master of a PLU file is managed by the server 700 or the like. The CPU 206 acquires the PLU file from the server 700 via the communication network 600 at a predetermined timing. Then, the CPU 206 stores the acquired PLU file in the RAM 208 or the auxiliary memory unit 209. The above-described timing may be an arbitrary timing. For example, the above-described timing may be a timing at which the main unit 200 is started, a timing at which a predetermined time is reached, or a timing at which the server 700 notifies that the PLU file is updated.

When the main unit 200 is operated in a predetermined operation mode for sales registration or the like, the CPU 206 executes a control process according to the control program stored in the ROM 207 or the auxiliary memory unit 209.

FIG. 4 is a flowchart illustrating the control process of the CPU 206. The contents of a process described below are an example, and various processes with which a similar result can be obtained can be appropriately used.

In Act 1, the CPU 206 determines whether or not the PLU code is input. When it is determined that the PLU code is not input, the CPU 206 determines that the result in Act 1 is NO and repeats Act 1. In this manner, the CPU 206 waits until the PLU code is determined to be input in Act 1.

In a case of registering one merchandise item as a sold merchandise item, the operator of the POS terminal 1 performs any of the following operations: (1) an operation of placing the barcode presented on the merchandise item in front of the reading window 101a; (2) an operation of placing the touch scanner 106b close to the barcode presented on the merchandise item; (3) an operation of touching a button that is associated with the merchandise item and displayed on the touch panel 103; (4) an operation of pushing a button in the keyboard 202 that is associated with the merchandise item; and (5) an operation of inputting a merchandise code of the merchandise item using the keyboard 202. Here, a touch panel may be used as the operator-side display 203 so that the same operation as in (3) can be performed by touching the operator-side display 203.

When the barcode is placed in front of the reading window 101a, the fixed scanner 105 reads the barcode. When the touch scanner 106b is placed close to the barcode, the touch scanner 106b reads the barcode. Barcode information indicated by a barcode presented on a merchandise item includes a PLU code which is an identification code of the merchandise item.

When the barcode is read by the fixed scanner 105 or the touch scanner 106b, the CPU 107 extracts the PLU code from the barcode information. When the touch panel 103 is touched or a button in the keyboard 202 is pushed, the CPU 107 or the CPU 206 determines a PLU code related to the touched button or the pushed button. The CPU 107 notifies the CPU 206 of the PLU code that is extracted or determined by the CPU 107 and identification information of a device inputting the PLU code via the interfaces 111 and 210.

In this manner, the touch panel 103, the fixed scanner 105, the touch scanner 106b, and the keyboard 202 serve as an inputting unit. In addition, when a touch panel is used as the operator-side display 203, the operator side display 203 may also serve as the inputting unit.

The POS terminal 1 is suitable for a store in which security tags are attached to only part of merchandise items for sale. A security tag is attached to a region of the merchandise item close to a barcode presented thereon. For that reason, when the operator places the merchandise item close to the handy unit 106 for barcode scanning, the disabling unit 106c comes close to the security tag attached to the merchandise item. As a result, the security tag is disabled by the disabling unit 106c. However, when the operator performs another operation to input the PLU code, the security tag is not disabled.

When the PLU code is input, the CPU 206 determines that the result in Act 1 is YES, and the process proceeds to Act 2.

In Act 2, the CPU 206 determines which device was used to input the PLU code and determines whether or not the used device is the touch scanner 106b. Specifically, the CPU 206 determines whether the PLU code was input by the keyboard 202. Then, when it is determined that the PLU code was not input by the keyboard 202, the CPU 206 determines which device was used to input the PLU code on the basis of identification information that was notified together with the PLU code by the scanner unit 100. When the CPU 206 executes the control process based on the control program in this manner, the computer that includes the CPU 206 as the central portion functions as a determining unit. Then, when the CPU 206 determines that the PLU code was input by the other devices than the touch scanner 106b, the CPU 206 determines that the result in Act 2 is NO, and the process proceeds to Act 3.

In Act 3, the CPU 206 determines whether or not the security flag is set. Specifically, the CPU 206 acquires a data record in which a filed F1 is filled with the input PLU code from a PLU file. Then, the CPU 206 determines whether or not a security flag filling a field F4 of the data record is set. When the security flag is determined to be set, the CPU 206 determines that the result in Act 3 is YES, and the process proceeds to Act 4.

In Act 4, the CPU 206 executes a notification operation. The notification operation is an operation for prompting the operator to scan the barcode again using the touch scanner 106b. The CPU 206 controls the operator-side display 203 such that a notification screen for prompting the operator to scan the barcode again using the touch scanner 106b is displayed on the operator-side display 203. The CPU 206 issues an instruction to the CPU 107 such that a guide screen similar to the notification screen is displayed on the touch panel 103.

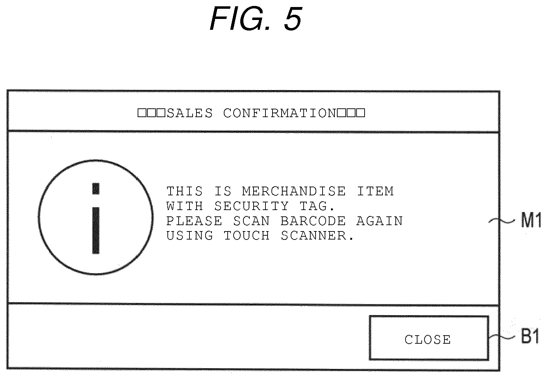

FIG. 5 illustrates an example of the notification screen.

In the notification screen illustrated in FIG. 5, a character message M1 prompts the operator to scan the barcode again using the touch scanner 106b.

As the notification operation, various operations of outputting a voice message, outputting a notification sound, and lighting up a notification lamp may be performed in addition to or instead of displaying the guide screen on the operator-side display 203 or the touch panel 103.

That is, the security flag being set indicates that the touch scanner 106b is allowed to input the related PLU code. Accordingly, in the PLU file, the security flag as data for identifying an inputting unit allowed to input the PLU code is stored in association with the PLU code which is an identification code of the merchandise item. In this manner, the RAM 207 or the auxiliary memory unit 209 that stores the PLU file serves as a storage unit. In addition, the operator-side display 203 or the touch panel 103 is an example of an operation unit which executes the notification operation. In addition, when the CPU 206 executes the control process based on the control program, the computer that includes the CPU 206 as the central portion functions as a control unit that controls the operation unit. With cooperation of the control unit of the computer that includes the CPU 206 as the central portion and the operator-side display 203 or the touch panel 103, a function as the notification unit is realized.

In Act 5, the CPU 206 determines whether or not a confirmation operation is performed. When the CPU 206 determines that the result in Act 5 is NO since no confirmation operation is performed, the CPU 206 repeats Act 5. In this manner, the CPU 206 waits for the confirmation operation in Act 5.

The operator who confirms contents of notification on the guide screen (illustrated in FIG. 5) performs a predetermined confirmation operation. The predetermined confirmation operation may be an arbitrary operation. For example, the predetermined confirmation operation may be an operation of touching a button B1 which is included in the guide screen as illustrated in FIG. 5. When the confirmation operation is performed, the CPU 206 determines that the result in Act 5 is YES, and returns to a waiting state in Act 1.

When the CPU 206 determines that the result in Act 2 is YES since the PLU code is input by the touch scanner 106b, the process proceeds to Act 6. In addition, when the CPU 206 determines that the result in Act 3 is NO since the security flag is not set, the process proceeds to Act 6.

In Act 6, the CPU 206 uses the input PLU code for a merchandise registration process. That is, when the security flag is set, the CPU 206 regards only the PLU code input by the touch scanner 106b as valid. In addition, when the security flag is reset, the CPU 206 regards the PLU code input by any devices as valid. Then, the CPU 206 uses the PLU code that is regarded as valid to the merchandise registration process. In other words, when the security flag is set, the CPU 206 allows the touch scanner 106b to input the PLU code, and when the security flag is reset, the CPU 206 allows all devices to input the PLU code, respectively. Then, the CPU 206 performs the merchandise registration process using the PLU code which is input by the device allowed to input. When the CPU 206 executes the control process based on the control program in this manner, the computer that includes the CPU 206 as the central portion functions as a processing unit that performs a process of using the valid input PLU code for the merchandise registration process.

The merchandise registration process is a process in which the PLU code that is obtained through the control process in FIG. 4 as described above is added to a list of sold merchandise items. The CPU 206 executes the merchandise registration process as a separate task from the control process in FIG. 4. Alternatively, the CPU 206 may execute the merchandise registration process integrally with the control process in FIG. 4. In this case, the merchandise registration process executed by the CPU 206 is an operation as the processing unit.

As described above, the upper surface of the top board 300a includes a space for placing merchandise items that have not been subjected to the sales registration and a space for placing merchandise items that have been subjected to the sales registration with the scanner unit 100 disposed therebetween. For that reason, the operator generally moves a merchandise item between the two spaces through an area in front of the reading window 101a. That is, the reading window 101a is positioned facing a movement route of the merchandise item and a scanning operation using the fixed scanner 105 is convenient in operability in comparison with a scanning operation using the touch scanner 106b. Therefore, the operator would generally perform a scanning operation using the fixed scanner 105. The input of the PLU code performed by the fixed scanner 105 in this way is regarded as being valid when the security flag is not set for the PLU code.

If a merchandise item to which the security tag is attached is scanned by the fixed scanner 105, the security tag is not disabled. However, if a security flag relating to the PLU file is set in the PLU code obtained through the scanning operation using the fixed scanner 105, the notification operation is performed to prompt the operator to scan the barcode again using the touch scanner 106b. In this case, input of the PLU code which is performed by the fixed scanner 105 is regarded as invalid. When the operator scans the barcode again using the touch scanner 106b according to the notification in the notification operation, the security tag should be disabled by the disabling unit 106c. Then, input of the PLU code performed by the touch scanner 106b is regarded as valid.

Accordingly, the operator may try the scanning operation using the fixed scanner 105 whether or not a merchandise item to be sold is a merchandise item to which the security tag is attached. If the notification operation is performed, the operator may scan the barcode again using the touch scanner 106b. As a result, a workload of the operator can be reduced in comparison with a case where the operator manually determines whether or not the security tag is attached for each merchandise item and performs an operation for disabling the security tag if the security tag is attached.

Since input of the PLU code performed by the fixed scanner 105 in association with a merchandise item to which the security tag is attached is regarded as valid, the PLU code of a merchandise item with a security tag being not disabled should not be subjected to the sales registration.

As described above, according to the POS terminal 1, it is possible to input an identification code of a merchandise item using a device suitable for the merchandise item.

Various modifications can be made to the embodiment as follows.

In the above embodiment, only the touch scanner 106b is allowed to input the PLU code of a merchandise item to which the security tag is attached. However, which device is allowed to input the PLU code in which conditions may be arbitrarily determined by the designer or the user. For example, when the disabling unit 106c is provided to disable the security tag attached to a merchandise item being placed in front of the reading window 101a, the fixed scanner 105 may be allowed to input the PLU code of a merchandise item to which the security tag is attached.

Only the input of the PLU code may be allowed according to predetermined conditions regardless of whether or not the security tag is attached. For example, it is assumable that only the fixed scanner 105 is allowed to input the PLU code for a high-priced merchandise item of which price is equal to or larger than 10000 yen when the fixed scanner 105 is a scanner that inputs the PLU code on the basis of an image obtained by imaging a merchandise item using a CCD camera or the like. Specifically, a high-priced merchandise item flag is written instead of the security tag. Then, when the PLU code of a merchandise item in which the high-priced merchandise item flag is set is input by the other devices than the fixed scanner 105, the CPU 206 regards the PLU code as invalid and performs the notification operation to prompt the operator to scan the barcode again using the fixed scanner 105. In this case, the above-described image is stored so that a person in charge can visually confirm the image and sales of the high-priced merchandise item later. That is, in the case of the high-price merchandise item, that is more likely to be a target for shoplifting, it is possible to confirm that the high-price merchandise item was properly subjected to the merchandise registration using the captured image.

Instead of the PLU file, a data file including at least one of a PLU codes list of a merchandise item to which the security tag is attached and a PLU codes list of a merchandise item to which the security tag is not attached may be used. In this case, if an obtained PLU code is included in the former list or if the obtained PLU code is not included in the latter list, the process proceeds to Act 4 from Act 3.

Alternatively, the PLU file may include identification information of a device which is allowed to input each PLU code or which is prohibited from inputting each PLU code instead of the security flag.

Alternatively, a list of devices which can be used to input the PLU code and a list file in which the PLU code which is allowed to be input by each device or which is prohibited from being input by each device are written may be stored in the ROM 207 or in the auxiliary memory unit 209. In addition, when the PLU code is input by any of the devices, the CPU 207 may determine that the input of the PLU code is allowed or is not allowed on the basis of the list file.

It is also possible to provide a POS terminal or a cash register which has a function of the scanner unit 100.

When the PLU code is input by any of the touch panel 103, the fixed scanner 105 and the touch scanner 106b, the CPU 107 in the scanner unit 100 determines whether or not the PLU coed is input by a device which is allowed to input the PLU code. The PLU file is stored in the auxiliary memory unit 110 in advance. The CPU 107 may notify the main unit 200 of only the PLU code input by a device which is allowed to input the PLU code. The CPU 107 controls the touch panel 103 such that a notification screen as shown in FIG. 5 is displayed on the touch panel 103. Alternatively, the CPU 107 issues an instruction to the CPU 206 such that a guide screen which is similar to the notification screen is displayed on the operator side display 203. In this manner, the CPU 107 functions as the determining unit, the processing unit, and the control unit. A process which the CPU 107 executes as the processing unit is a process of notifying the main unit 200 of the PLU code. In addition, in this case, the auxiliary memory unit 110 is operated to function as the storage unit.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the framework of the inventions. The accompanying claims and their equivalents are intended to cover such forms or modifications as would fall within the scope and framework of the inventions.

## Claims

1. A register system comprising:
a first code scanner that includes a circuit configured to disable a security tag;
a second code scanner that does not include the circuit;
a data storage in which a product code is stored in association with a flag, for each product registered for sale; and
a processor configured to carry out purchase registration of a product based on a product code obtained through the second code scanner or cause a notification to be generated without carrying out the purchase registration of the product based on the product code obtained through the second code scanner, depending on a state of a flag associated with the obtained product code in the data storage.

2. The register system according to claim 1, wherein
when the flag associated with the obtained product code is in a first state, the processor carries out the purchase registration of the product based on the product code obtained through the second code scanner, and
when the flag associated with the obtained product code is in a second state different from the first state, the processor causes the notification to be generated without carrying out the purchase registration.

3. The register system according to claim 1, wherein
the processor carries out purchase registration of the product based on a product code obtained through the first code scanner after the notification is generated.

4. The register system according to any one of claims 1 to 3, wherein
the notification includes a visual message prompting a user to use the first code scanner for purchase registration of the product.

5. The register system according to any one of claims 1 to 4, wherein
the processor is configured to carry out purchase registration of products based on product codes obtained through the first code scanner, regardless of states of flags associated therewith in the data storage.

6. A register system comprising:
a code scanner that includes a circuit configured to disable a security tag;
an operation panel;
a data storage in which a product code is stored in association with a flag, for each product registered for sale; and
a processor configured to carry out purchase registration of a product based on a product code input through the operation panel or cause a notification to be generated without carrying out the purchase registration of the product based on the product code input through the operation panel, depending on a state of a flag associated with the input product code in the data storage.

7. The register system according to claim 6, wherein
when the flag associated with the input product code is in a first state, the processor carries out the purchase registration of the product based on the product code input through the operation panel, and
when the flag associated with the input product code is in a second state different from the first state, the processor causes the notification to be generated without carrying out the purchase registration.

8. The register system according to claim 6, wherein
the processor carries out purchase registration of the product based on a product code obtained through the code scanner after the notification is generated.

9. The register system according to any one of claims 6 to 8, wherein
the notification includes a visual message prompting a user to use the code scanner for purchase registration of the product.

10. The register system according to any one of claims 6 to 9, wherein
the processor is configured to carry out purchase registration of products based on product codes obtained through the code scanner, regardless of states of flags associated therewith in the data storage.

11. The register system according to any one of claims 1 to 10, further comprising:
a display, wherein
the processor causes the notification to be displayed on the display.

12. A method for carrying out purchase registration with a register system, comprising:
storing, in a data storage, a product code in association with a flag for each product registered for sale;
obtaining a product code of a product through code scanning by a code scanner or a code input on a control panel, without disabling a security tag attached to the product;
when a flag associated with the obtained product code is in a first state in the data storage, processing purchase registration of the product based on the obtained product code; and
when the flag associated with the obtained product code is in a second state different from the first state in the data storage, generating a notification without processing the purchase registration of the product based on the obtained product code.

13. The method according to claim 12, further comprising:
after the notification is generated, obtaining a product code of the product through code scanning by a second code scanner while disabling the security tag attached to the product; and
processing purchase registration of the product based on the product code obtained through the code scanning by the second scanner.

14. The method according to claim 12, wherein
the notification is displayed on a display of the register system.

15. The method according to claim 14, wherein
the notification includes a visual message prompting a user to not use the code scanner for purchase registration of the product.
